# EUROPEAN PATENT SPECIFICATION

(11) **EP 3 869 967 B1**
(45) Date of publication and mention of the grant of the patent: **04.10.2023**
(21) Application number: 19877455.6
(22) Date of filing: 25.10.2019
(51) Int. Cl.: A21D 13/48, A23P 30/10, A47G 21/00

(54) **PROCESS FOR PRODUCING EDIBLE AND BIODEGRADABLE UTENSILS USING VENTILATED, STACKABLE, PRESSING MOLDS**
VERFAHREN ZUR HERSTELLUNG VON ESSBAREN UND BIOLOGISCH ABBAUBAREN UTENSILIEN MIT BELÜFTETEN, STAPELBAREN PRESSFORMEN
PROCÉDÉ DE FABRICATION D'USTENSILES COMMESTIBLES ET BIODÉGRADABLES À L'AIDE DE MOULES DE PRESSAGE VENTILÉS, EMPILABLES

(30) Priority: 25.10.2018 US 201862750705 P
(43) Date of publication of application: 01.09.2021
(73) Proprietor: Kong, Zhicong, Oceanside, CA 92057 (US)
(72) Inventor: Kong, Zhicong, Oceanside, CA 92057 (US)
(74) Representative: Lang, Christian
(86) International application number: PCT/US2019/058231
(87) International publication number: WO 2020/087052

(56) References cited:
- WO-A1-2018/157119
- WO-A1-2018/157119
- GB-A- 2 557 380
- US-A1- 2003 211 205
- US-A1- 2003 211 205
- US-A1- 2009 145 306
- US-A1- 2012 064 185
- US-A1- 2019 117 014

## Description

### FIELD OF THE INVENTION

The present invention relates generally to the field of pressing molds that can be used for forming and steaming edible materials.

### PRIOR ART

Document US 2003/0211205 A1 relates to an edible utensil for twisting up and eating spaghetti and a method for making the same, said utensil being made of a food product, such as bread. The method for making such edible utensil includes the subsequent steps of: providing a mold having a base member and a cover member that form a cavity; filling the base member of the mold with a mass of dough; closing the mold; cooking the dough mass so that the dough rises and fills the cavity of the mold; removing the cooked dough mass from the mold and cooling the cooked dough mass to obtain the edible utensil. The mold for forming the utensil shown therein, includes a first mold member having at least one utensil-complementary form recessed into a top surface of the first mold member for receiving uncooked dough, the form comprising contours complementary to a lower half of the utensil to be formed; and a second mold member comprising at least one second utensil-complementary form recessed into a bottom surface of the second mold member for contacting the uncooked dough received on first mold member, the second form comprising contours complementary to an upper half of the utensil to be formed.

Furthermore, exemplary utensils and recipes for dough suitable for use in methods of preparing edible and biodegradable utensils are provided in PCT International Application Publication No. WO 2018/157119 A1. Also provided are instructions for preparing, kneading, and rolling dough as well as forms for cutting the dough into utensil shapes, and preferred ranges of utensil thicknesses and dimensions.

However, for large industrial applications, there is still room for improvements to enable efficient production of high amounts of edible utensils.

### SUMMARY OF THE INVENTION

To solve the above objective, the present invention provides a process for producing a plurality of edible and biodegradable utensils according to claim 1, comprising the steps of: preparing an edible and biodegradable dough; rolling the dough to a desired thickness; cutting a plurality of utensil-shaped portions of the rolled dough; providing a platform for supporting a stacked assembly of molds adapted for securing to an oven rack; providing a plurality of mold members, each mold member comprising a first utensil-complementary form disposed on the top surface thereof, and a second utensil-complementary form disposed on the bottom surface thereof; engaging one of the plurality of mold members on the platform; placing a utensil-shaped portion of uncooked dough on the utensil-complementary form of the platform-engaged mold member; contacting the dough with the second utensil-complementary form disposed on the bottom surface of a second mold member to form a first layer of utensil mold; repeating the steps, wherein subsequent layers of molds are stacked on top of the first mold, the second mold member becoming the bottom mold member for subsequent layers, until a desired number of utensils are molded, thereby producing a stacked assembly of molded dough; placing the stacked assembly of molded dough on an oven rack; steaming the stacked assembly of molded dough; cooling the steamed dough; and removing the cooled utensils from the molds, thereby producing a plurality of edible and biodegradable utensils.

### BRIEF DESCRIPTION OF THE DRAWINGS

**FIG. 1** is a top view of an exemplary first mold member **52** having a plurality of utensil bottom-complementary forms **12.** The plurality of forms **12** are labeled **12A-12J** in this figure to illustrate correspondence to the plurality of utensil top-complementary forms **13A-13J** in **FIG. 2****.** The top view of dual-sided stackable mold member **3** is the same as first mold member **1.**
**FIG. 2** is a bottom view of an exemplary second mold member **2** having a plurality of utensil top-complementary forms **13.** The plurality of forms are labeled **13A-13J** to illustrate correspondence to the plurality of utensil bottom-complementary forms **12A-12J** in **FIG. 1****.** The top view of dual-sided stackable mold member **3** is the same as second mold member **2.**

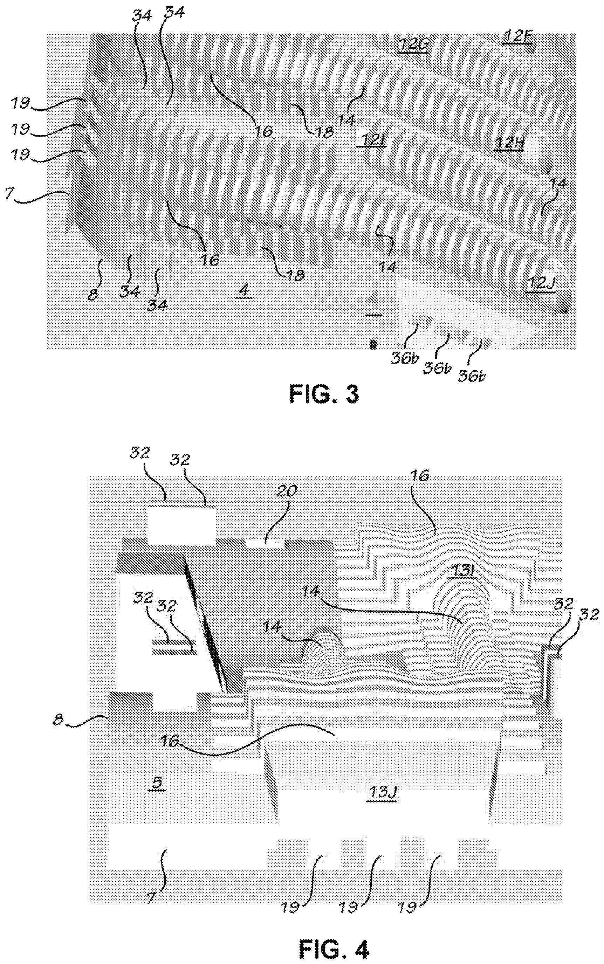

**FIG. 3** is a top perspective view of a portion of the first mold member **1** illustrated in **FIG. 1****.**
**FIG. 4** is a side perspective view of a portion of the second mold member **2** illustrated in **FIG. 2****.**
**FIG. 5** is a side perspective view of an exemplary dual-sided stackable mold member 3.
**FIG. 6** is a schematic drawing of an exemplary mold assembly **10.**
**FIG. 7** is a schematic drawing of a stacked mold assembly **100.**
**FIG. 8** is a schematic drawing of a system **200** according to an embodiment of the invention.
**FIG. 9** is a top view of the platform **44** illustrated in **FIG. 8****.**
**FIG. 10** is a photograph of a prior art revolving commercial oven suitable for use in certain processes of the invention.
**FIG. 11** is a photograph of prior art stacking device illustrating a process of a stacking contemplated for use in certain processes of the invention.
**FIG. 12A** is a top view of a first mold member **101** (forming a spoon) having a plurality of utensil-complementary forms **112.** The bottom view of the first mold member **101** (not shown) is the complement of the top mold member. For clarity, openings **124** are not shown.
**FIG. 12B** is a side **(117)** view of the first mold member shown in **FIG. 12A****.**
**FIG. 12C** is a side **(119)** view of the first mold member shown in **FIG. 12A****.**
**FIG. 13A** is a top view of a second mold member **102** having a plurality of utensil top-complementary forms **113.** The bottom view of the second mold member **102** (not shown) is the complement of the top mold member. For clarity, openings **124** are not shown.
**FIG. 13B** is a side **(117)** view of the first mold member shown in **FIG. 12A****.**
**FIG. 13C** is a side **(119)** view of the first mold member shown in **FIG. 12A****.**
**FIG. 14A** is a top view of a first mold member **101** (for molding a fork) having a plurality of utensil-complementary forms **112.** The bottom view of the first mold member **101** (not shown) is the complement of the top mold member. For clarity, openings **124** are not shown.
**FIG. 14B** is a side **(117)** view of the first mold member shown in **FIG. 14A****.**
**FIG. 14C** is a side **(119)** view of the first mold member shown in **FIG. 14A****.**
**FIG. 15A** is a top view of a second mold member **102** (for molding a fork) having a plurality of utensil top-complementary forms **113.** The bottom view of the second mold member **102** (not shown) is the complement of the top mold member. For clarity, openings **124** are not shown.
**FIG. 15B** is a side **(117)** view of the first mold member shown in **FIG. 15A****.**
**FIG. 15C** is a side **(119)** view of the first mold member shown in **FIG. 15A****.**
**FIG. 16A** is a top view of a first mold member **101** (forming a knife) having a plurality of utensil-complementary forms **112.** The bottom view of the first mold member **101** (not shown) is the complement of the top mold member. For clarity, openings **124** are not shown.
**FIG. 16B** is a side **(117)** view of the first mold member shown in **FIG. 12A****.**
**FIG. 16C** is a side **(119)** view of the first mold member shown in **FIG. 12A****.**
**FIG. 17A** is a top view of a second mold member **101** (forming a knife) having a plurality of utensil-complementary forms **113.** The bottom view of the first mold member **101** (not shown) is the complement of the top mold member. For clarity, openings **124** are not shown.
**FIG. 17B** is a side **(117)** view of the first mold member shown in **FIG. 12A****.**
**FIG. 17C** is a side **(119)** view of the first mold member shown in **FIG. 12A****.**
**FIG. 18A** is a side view an interlocking connector dowel **136.**
**FIG. 18B** is a bottom view of the interlocking connector dowel **136** illustrated in **FIG. 16A****.**
**FIG. 18C** is a cross-sectional view of the interlocking connector dowel **136** illustrated in **FIG. 16C****.**
**FIG. 18D** illustrates connecting two interlocking connector dowels **136.**

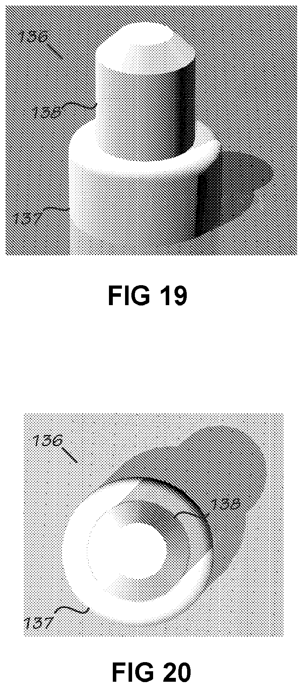

**FIG 19** is a 3D illustration of a side perspective view of the interlocking connector dowel **136** of **FIG 16A****.**
**FIG 20** is a 3D illustration of a top perspective view of the interlocking connector dowel **136** of **FIG 16A** illustrating openings **124.**

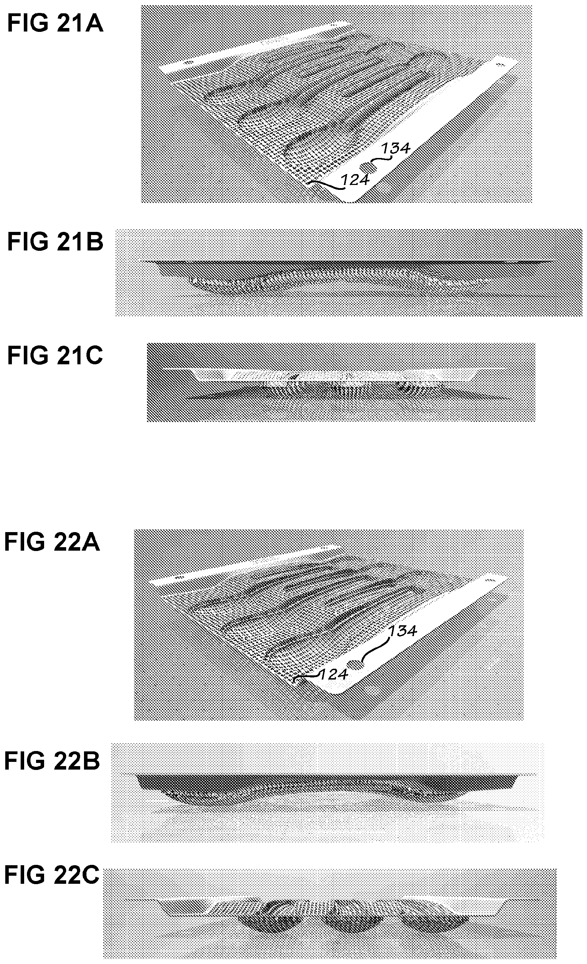

**FIG. 21A** is a 3-D top perspective illustration of the mold member **101** illustrated in **FIG. 12A** illustrating openings **124.**
**FIG. 21B** is a side perspective view of the mold member **101** illustrated in **FIG. 12C****.**
**FIG. 21C** is a side perspective view of the mold member **101** illustrated in **FIG. 12B****.**
**FIG. 22A** is a 3-D top perspective illustration of the mold member **102** illustrated in **FIG. 13A** illustrating openings **124.**
**FIG. 22B** is a 3-D side perspective view of the mold member **102** illustrated in **FIG. 13C****.**
**FIG. 22C** is a 3-D side perspective view of a portion of the mold member **102** illustrated in **FIG. 13B****.**

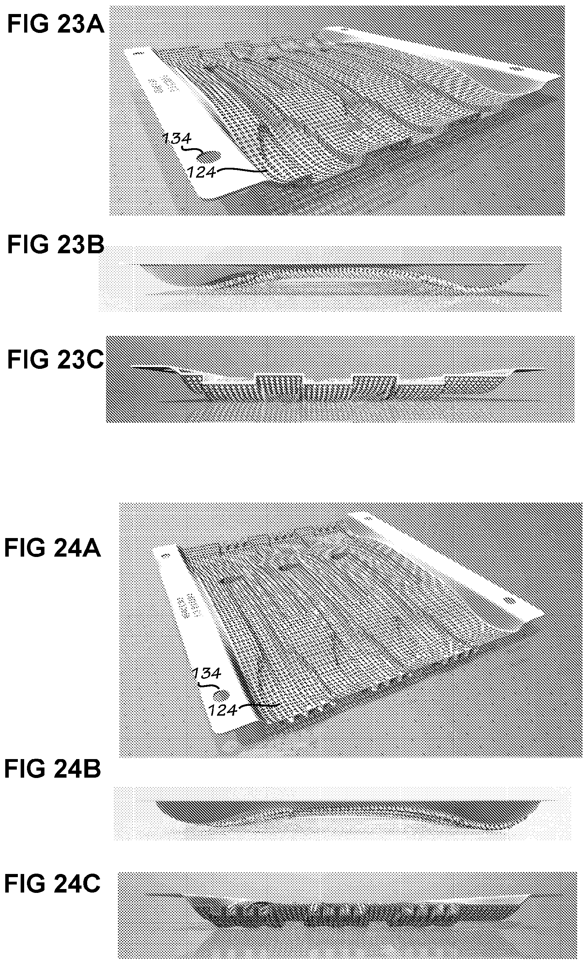

**FIG. 23A** is a 3-D top perspective illustration of the mold member **102** illustrated in **FIG. 15A** illustrating openings **124.**
**FIG. 23B** is a side perspective view of the mold member **102** illustrated in **FIG. 15C****.**
**FIG. 23C** is a side perspective view of the mold member **102** illustrated in **FIG. 15B****.**
**FIG. 24A** is a 3-D top perspective illustration of the mold member **101** illustrated in **FIG. 14A** illustrating openings **124.**
**FIG. 24B** is a 3-D side perspective view of the mold member **101** illustrated in **FIG. 14C****.**
**FIG. 24C** is a 3-D side perspective view of a portion of the mold member **101** illustrated in **FIG. 14B****.**
**FIG. 25A** is a 3-D top perspective illustration of the mold member **101** illustrated in **FIG. 17A** illustrating openings **124.**
**FIG. 25B** is a side perspective view of the mold member **101** illustrated in **FIG. 17C****.**
**FIG. 25C** is a side perspective view of the mold member **101** illustrated in **FIG. 17B****.**
**FIG. 26A** is a 3-D top perspective illustration of the mold member **102** illustrated in **FIG. 16A** illustrating openings **124.**
**FIG. 26B** is a 3-D side perspective view of the mold member **102** illustrated in **FIG. 16C****.**
**FIG. 26C** is a 3-D side perspective view of a portion of the mold member **102** illustrated in **FIG. 16B****.**
**FIG. 27** is a schematic illustration of a mold assembly comprising two mold members **101, 102** with dough therebetween and four connectors **136.**
**FIG. 28** is a schematic illustration of a mold assembly 110 comprising pairs of mold members **101, 102** with dough therebetween and a plurality of connectors **136.**
**FIG. 29** is a top view of an exemplary platform **144** for supporting mold members, and stacked mold assemblies.

### DESCRIPTION

It is to be understood that both the foregoing general description and the following detailed description are exemplary and explanatory only and are not restrictive of the invention claimed. As used herein, the use of the singular includes the plural unless specifically stated otherwise. As used herein, "or" means "and/or" unless stated otherwise. Furthermore, use of the term "including" as well as other forms, such as "includes," and "included," is not limiting.

Section headings used herein are for organizational purposes only and are not to be construed as limiting the subject matter described.

**"About"** as used herein means that a number referred to as "about" comprises the recited number plus or minus 1-10% of that recited number. For example, "about" 100 mm can mean 95-105 mm or as few as 99-101 mm depending on the situation. Whenever it appears herein, a numerical range such as **"1** to **20"** refers to each integer in the given range; e.g., **"1** to **20** mm" means that the range can be only 1 mm, 2 mm, 3 mm, etc., up to and including 20 mm. Where a range described herein includes decimal values, such as "1.2% to 10.5%", the range refers to each decimal value of the smallest increment indicated in the given range; e.g."1.2% to 10.5%" means that the percentage can be 1.2%, 1.3%, 1.4%, 1.5%, etc. up to and including 10.5%; while "1.20% to 10.50%" means that the percentage can be 1.20%, 1.21%, 1.22%, 1.23%, etc. up to and including 10.50%.

As used herein, the term **"substantially"** refers to a great extent or degree. For example, "substantially all" typically refers to at least about 90%, frequently at least about 95%, often at least 99%, and more often at least about 99.9%.

Disclosed herein are ventilated, stackable, pressing molds for use in the preparation of edible and biodegradable utensils and other comestible items. Specifically, the molds form and maintain a 3- dimensional utensil shape from malleable, uncooked, edible dough throughout a process of steaming and dehydration of the edible dough to form items of sufficient strength for use as utensils such as cutlery that are both edible and biodegradable.

The utensils can be used for serving, cutting and eating food and thereafter, the utensils can be consumed by the user, fed to animals or composted. The molds are suitable for preparing cutlery such as forks, spoons, sporks (a hybrid utensil including a spoon-like shallow scoop with two or more fork-like tines), knives, chopsticks and the like.

The molds described herein may be also useful for preparing other comestible items, such as a teething and chewing devices, including baby teethers, dog bones and chew toys.

The molds described herein are also suitable for preparing edible plates, bowls, cups, other dishes, as well as food serving and dispensing items (collectively "dishware"), including but not limited to take-out containers. The molds described herein are particularly adapted to making items from grain-based dough, which may be a more ecologically friendly alternative to plastic. Many other products that are currently made from plastic, particularly disposable plastics that would otherwise be discarded and may wind up polluting the environment, could be also made using the molds and method described herein.

The edible utensils and other items that can be made using molds and method described herein, have a first or top surface, a second or bottom surface opposing the first side, and a thickness. Each surface can independently be planar, convex, concave or can include a combination of planar, convex, and/or concave regions.

The thickness of each utensil can be uniform or it can vary from one area of the utensil to another. For example, a knife that includes a blade portion and a handle portion may be thicker throughout the handle portion than it is in the area of the cutting edge of the blade. Variations in thickness, as well as ribs, gussets and the like can be included in the utensil and dishware shapes prepared using the molds and method disclosed herein to increase the strength of the molded pieces. Reinforcing variations, ribs, gussets and the like may be strategically formed in areas that are exposed to stress forces during use.

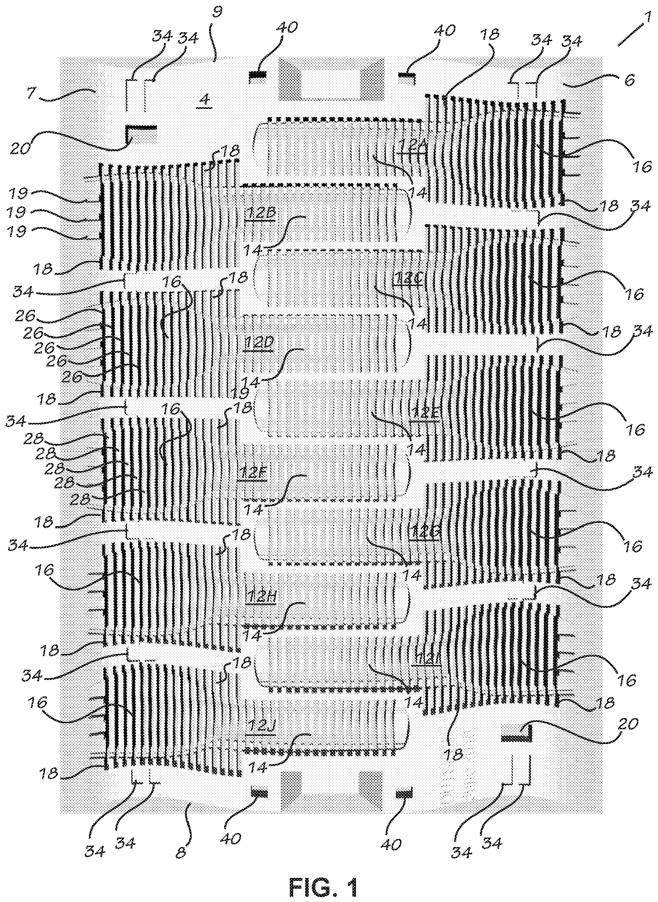

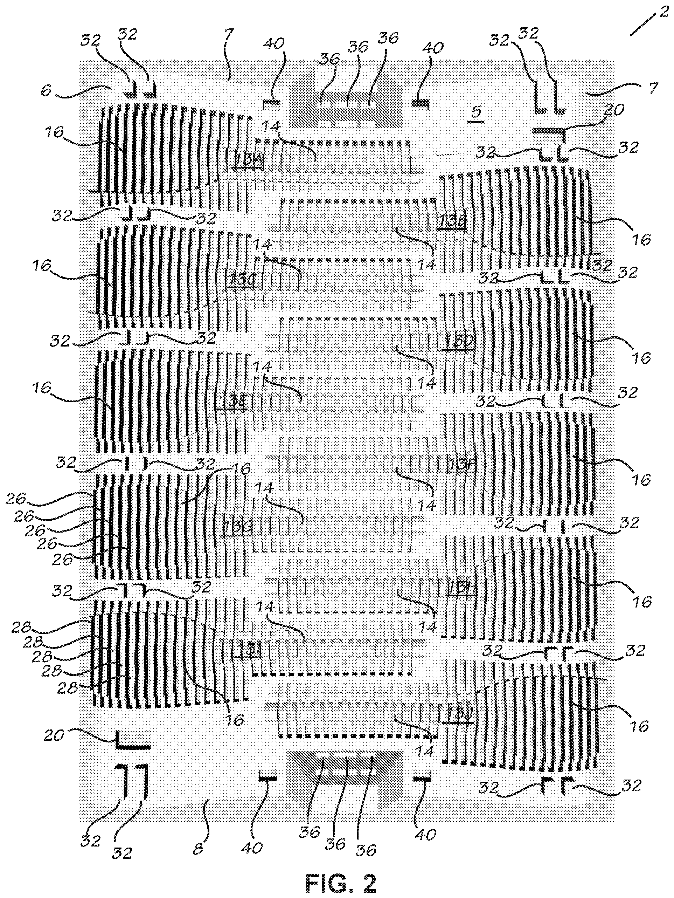

Exemplary molds for preparing utensils include a first generally planar mold member **1** (**FIG. 1**) and a second generally planar mold member **2** (**FIG 2**.), each mold member having a top surface **4,** a bottom surface **5,** and at least one vertical side (e.g. a continuous side such as in a circle), but typically having four vertical sides **6-9;** the first mold member **1** including at least one utensil- complementary form **12** in the shape of a utensil that is recessed into the top surface **4** of the first mold member **1** for receiving uncooked dough, the form **12** comprising contours complementary to a first side of the utensil; and the second mold member **2** including at least one utensil-complementary form **13** in the shape of the utensil that is recessed into the bottom surface **5** of the second mold member **2** for contacting the dough received on the first mold member **1,** the form **13** comprising utensil contours complementary to the second side of the utensil that opposes the first utensil side. The first side of the utensil, which is complementary to form **12,** is typically the underside of the utensil while the opposing second side of the utensil, which is complementary to form **13,** is typically the topside of the utensil.

The mold can have any overall shape, such as square, rectangular, polygonal, elliptical, or circular, but is most often rectangular, having four sides **6-9.** The four sides may be of the same or different lengths and heights. In one aspect, a first vertical side **6** opposes and is generally parallel to a second vertical side **7,** both of the first and second vertical sides **6, 7** having generally rectangular shapes that are similar, identical or are mirror images of each other. A third vertical side **8** opposes and is generally parallel to a fourth vertical side **9**; both of the third and fourth vertical sides may have generally rectangular shapes that are similar, identical or mirror images of each other, or may be for example, curved rectangular, arched rectangular or have complex geometric shapes that include multiple curves, arches and/or linear edges. In one illustrative example, vertical sides **8** and **9** may include two curved regions corresponding to the food usage portion of the utensil.

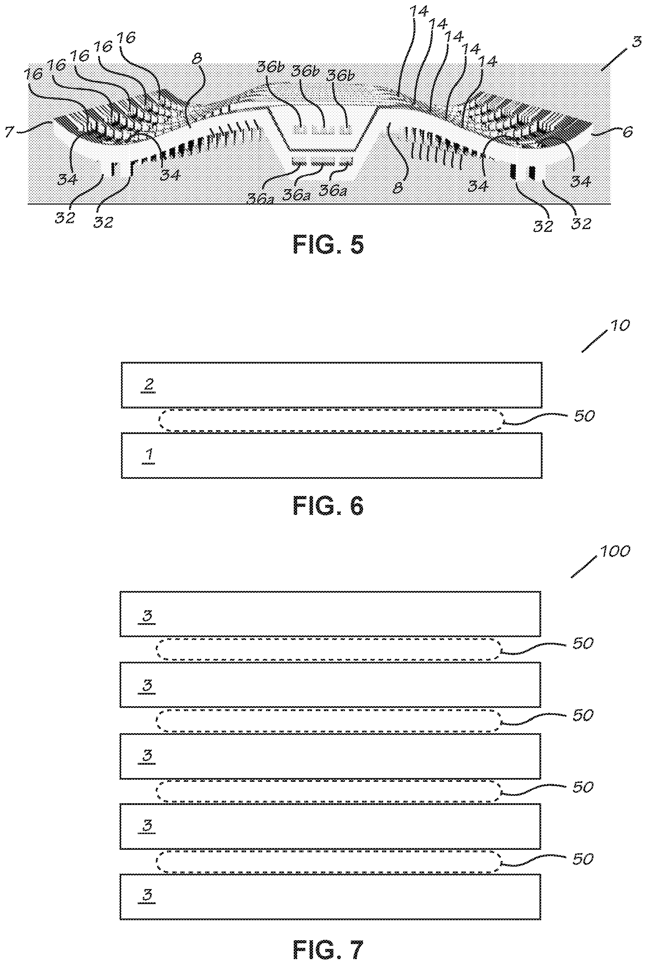

The first and second mold members **1, 2** are mated together such that they form a three dimensionally shaped utensil when uncooked dough is placed on form **12** of first mold member **1** and the dough is then contacted with form **13** of second mold member **2** to form a sandwich as illustrated schematically in **FIG. 6****.**

As shown e.g. in **FIGs. 1** and **2****,** the forms **12** and **13** each include a handle portion **14** and a food usage portion **16** (e.g., a portion forming the tines of a fork or bowl of a spoon). The food usage portion **16** may be oriented to drain away from dough placed on form **12.** The food usage portion **16** of form **12** can be recessed deeper into the first mold member **1** than the handle portion **14,** and thereby the food usage portion **16** is lower than the handle portion **14** in the assembled final mold assembly /sandwich **10** (shown schematically in **FIG. 6**) to increase drainage and direct it away from the dough. For example, mold assembly **10** can include an arched or curved shape, and/or form **12** may be sloped relative to the overall surface plane of the first mold member **1.** Referring to **FIG. 5****,** arches, curves or slopes in the forms **12, 13** may also be reflected in an arch, curve or slope shape of the third and fourth vertical sides **8, 9** as can be seen **in** **FIG. 5****.**

Form **12** can also include a shoulder **18,** which is a shallow broadening of the form adjacent to all or a part of the utensil outline. Inclusion of a shoulder **18** has been found to improve placement of uncooked dough in the mold by avoiding deformation of the dough and to retain the dough in the form throughout the steaming process. Tabs **19** may also be included in the form to direct placement and to maintain separation between parts of the utensil, such as the tines of a fork, and between adjacent utensils during the steaming process.

The first and second mold members **1, 2** may comprise drainage ports **20** (e.g., through holes) or collection recesses **22** (e.g., blind holes or slots that collect water) into which water drains away from the dough placed on the form. The drainage ports **20** and collection recesses **22** are disposed at points where water may accumulate, such as low points in the mold members **1** and **2,** and at points where the mold has been designed to flow water away from the dough as described above. Drainage ports **20** through the second mold member **2** preferably align with drainage ports **20** through the first mold member **1,** thereby providing a route for water to drain through and out of the assembled final mold **10.**

The first and second mold members **1, 2** further comprise a plurality of openings **24** to allow air and/or steam to flow through the mold. The openings include one or more open slots, holes, ports and/or other penetrations through the first and second mold members **1, 2,** which can be perpendicular to the surface plane of the mold members as illustrated in the various figures, or can be disposed at an oblique angle relative to the surface plane of the mold members. In certain illustrative examples, the openings are regularly spaced slots **26** through the full thickness of each of the first and second mold members **1, 2** and are distributed throughout the utensil-complementary forms **12** and **13** and shoulder regions **18** in an orientation perpendicular to the longitudinal axes of the forms, said axes running from the handle portion **14** to food usage portion **16** of forms **12** and **13.** The space between slots **26** can vary, but is frequently approximately equal to or slightly wider than that of the slots, thereby forming slats **28** between adjacent slots. In certain illustrative examples, the slots, holes, ports and/or other penetrations through the first mold member **1** align with slots, holes, ports and/or other penetrations through the second mold member **2** such that air and/or steam can flow vertically through an assembly **10** of the first and second mold members **1, 2.**

Furthermore, the assembled mold **10** includes one or more horizontal vents **30** between the first and second mold members **1** and **2.** In one illustrative example, sides **8** and **9** of mold members **1** and **2** include one or more horizontal vent perforations **36a** and **36b.** The lower vent perforations **36a** (illustrated in **FIG. 5****)** on the sides **8, 9** of mold member **2** align horizontally with upper vent perforations **36b** on mold member **1** to form ventilation channels that draw air horizontally into and through the mold **10,** and passing over the baked dough to cool and dry the finished utensils before removing them from the mold **10.**

In another illustrative example, vents may be formed by vertical projections **32** disposed on one of the mold members **1, 2** that engage mated indentations **34** on the complementary mold member and hold the two mold members apart vertically. For example, two or more "leg" projections **32** on the bottom surface of the second mold member **2** can be mated to recesses **34** in the top surface **4** of the first mold member **1,** the two or more legs **32** having a length that exceeds the depth of the recess by the distance the mold members are held apart from each other, thereby creating vent space **30** therebetween. Symmetrical and/or asymmetrical arrays of such legs and mated recesses of various shapes (e.g., having square, circular or triangular cross sections), sizes and/or number can be disposed on the first and second mold members to orient and stabilize assembly of the mold, as well as providing ventilation between mold members.

In certain illustrative examples, the mold members are held 2-10 mm apart from top of first mold member to bottom of second mold member. Typically, the distance is between about 3 mm to about 8 mm, frequently about 4 mm to about 7 mm, and most often about 5 mm to about 6 mm, such as about 5.5 mm. The spacing between mold members provides both airflow and permits control over the thickness of the dough between the first and second mold members **1, 2.** The dough, when pressed between two mold members, is typically between 1 mm to about 5 mm thick, frequently between about 2 mm to about 4 mm thick, and most often about 2.5 to about 3.5 mm thick. For example, the dough can be 2.0, 2.1, 2.2, 2.3, 2.4, 2.5, 2.6, 2.8, 2.9, 3.0, 3.1, 3.2, 3.4, 3.5, 3.6, 3.7, 3.8, 3.9, or 4.0 mm thick.

Molds can be designed with single utensil forms **12** and **13** to produce a single utensil, or with multiple form iterations on a single mold to produce multiple utensils of the same or different types from a single mold **10.** For example, a mold comprising a first mold member **1** and a second mold member **2** can include utensil-complementary forms to produce 2, 3, 4, 5, 6, 7, 8, 9, 10, 11, 12 or more forks, 2, 3, 4, 5, 6, 7, 8, 9, 10, 11, 12 or more spoons, or 2, 3, 4, 5, 6, 7, 8, 9, 10, 11, 12 or more knives. The first and second mold members **1, 2** shown in FIGs. **1** and **2** are designed to produce 10 forks. Alternatively, a mold comprising a first mold member 1 and a second mold member **2** can include utensil- complementary forms to product 2, 3, 4, 5, 6, 7, 8, 9, 10, 11, 12 or more different utensils, such as one or more place settings of a fork, a spoon and a knife. The utensil- complementary forms can be arranged on the mold members to minimize overall mold surface areas and overall size, e.g. by staggering the placement of forms and contours.

Mold members can be made from any biocompatible food-grade material that can withstand the conditions of steaming and dehydration of the utensils during the process of the invention, without deforming. Exemplary materials include metals (such as aluminum or stainless steel) and plastics, such as ULTEM 1010^{™} (polyetherimide). The mold members have a thickness sufficient to press, form and retain uncooked dough in a utensil shape. Plastic mold members typically have a thickness of about 5 mm to about 10 mm, frequently about 6.5 mm to about 9 mm, and most often about 7.5 mm to about 8 mm.

Each mold 100 includes a plurality of stackable mold members that form multiple layers of utensils, as illustrated schematically in **FIG. 7****.** The plurality of stackable mold members includes a first mold member **1** having a top surface **4** as described above, with second and subsequent mold members having bottom surfaces **5** also as described above, thereby forming a first layer of utensils when uncooked dough is molded between the first and second mold members. The second and subsequent stackable mold members **3** also have a top surface **4** identical to the top surface of the first mold member, which thus forms the bottom of an additional layer of utensils when dough is molded between the second and a subsequent mold member 3. Further layers of utensils are formed by molding additional dough between subsequent mold members, each subsequent mold members having a top surface complementary to the bottom of one or more utensils and a bottom surface complementary to the top(s) of the one or more utensils. In certain examples, each of the plurality of mold members **3** has identical top and bottom surfaces (**4**, **5**) and identical vertical sides (**6-9**).

An assembly **10** of a first mold member **1** and second mold member **2** with a layer of dough therebetween to form a single layer of utensil(s) is illustrated schematically in **FIG. 6****.** An assembly **200** of five identical, stackable mold members **3** with four layers of dough to form four utensil layers is illustrated schematically in **FIG. 7****.**

### Assemblies

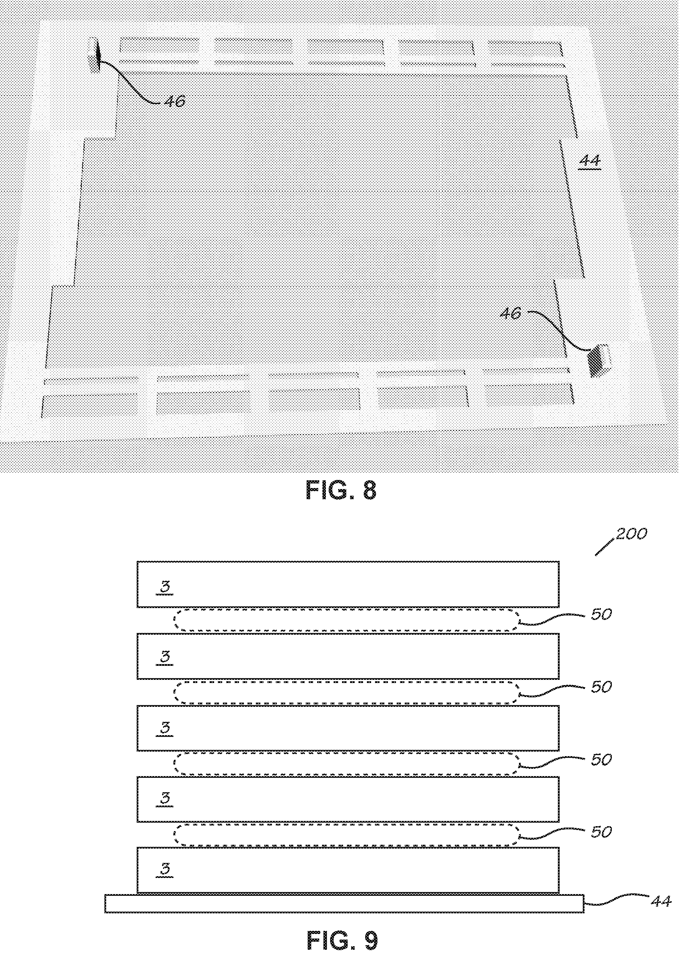

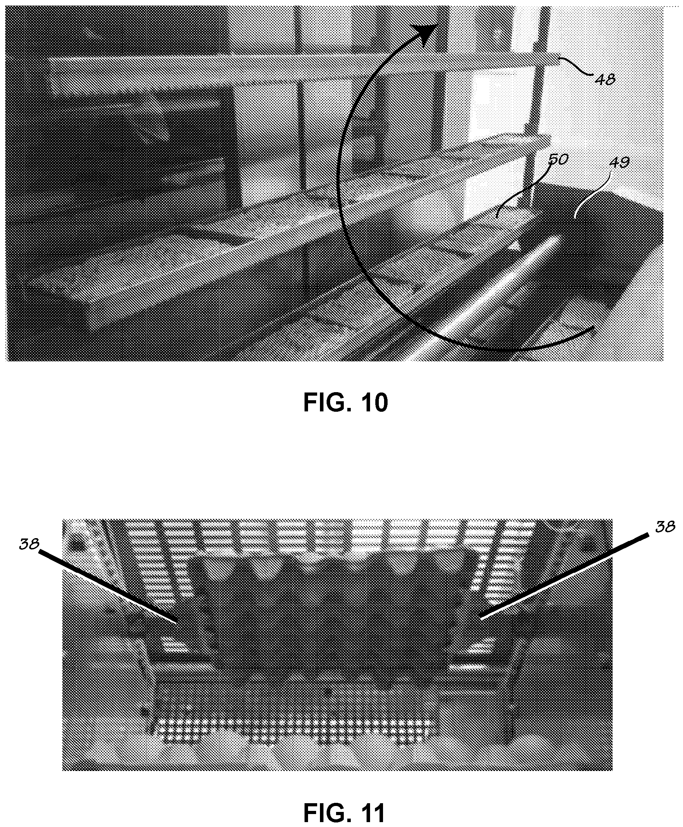

For use in the process of producing a plurality of edible and biodegradable utensils of the present invention, an assembly **200** for preparing utensils is provided, comprising a plurality of stackable mold members **3,** each having identical top and bottom surfaces as described above; and a platform **44** for supporting the stacked mold. The platform **44** includes pegs **46** that engage openings in the bottom of stackable mold members, such as the drainage ports **20.** For example, the legs **32** disposed on the bottom surfaces of mold members that are mated to recesses **34** in the top surfaces of mold members also serve to stabilize the stacked mold. The platform **44** can be a sheet, rack or other horizontal form; typically, the platform **44** acts to support the bottom mold member in a stacked mold. The open center of the platform **44** illustrated in **FIG. 9** facilitates and encourages ventilation from beneath the stacked mold. The platform **44** may be adapted for use in a commercial steaming oven, such that the platform **44** can be placed on an oven rack and rotated vertically and/or horizontally in a commercial oven during the steaming process. The oven **47** can include revolving racks **48** and a means **49** to automate rotation of the vertical and horizontal position of racks to promote even steaming. A suitable revolving rack commercial oven is shown in **FIG. 10** in which dough **50** is shown on revolving racks rotated by a means **49** that includes the illustrated gear. Thus, a system for producing utensils may be provided that includes a plurality of stackable mold members **3;** a platform **44** that engages and secures a mold **10** or stacked assembly of mold members **100;** and an oven **47** that includes rotating racks **48** that accepts platform **44** and secures the mold **10** or a stacked assembly of mold members **100** during rotation and steaming.

The system can also include a means for placing dough on mold members and a means for stacking mold members. Dough can be placed on each form manually by an operator using e.g., a spatula or placement can be automated.

The means **37** for stacking mold members can include manual stacking by an operator, or it can include a mechanized and/or automated stacking device that engages unstacked mold members, stacks them one on top of another, and then releases the stacked mold member. A means **37** contemplated for stacking mold members is similar to the device illustrated in **FIG. 11****,** which is used to stack trays of table eggs. This means provides a pair of stacking arms **38** that engage lift holes **40** on the opposing sides of a stackable mold member; the stacking arms **38** then lift and position the engaged mold member on top of another stackable mold member, and then disengages the stackable mold member in a stacked position.

The present invention provides a process for producing a plurality of edible and biodegradable utensils using the molds described above. The process includes the steps of: (a) preparing an edible and biodegradable dough; (b) rolling the dough to a desired thickness; (c) cutting a plurality of utensil-shaped portions of the rolled dough; (d) providing a platform for supporting a stacked assembly of molds adapted for securing to an oven rack; (e) providing a plurality of mold members, each mold member comprising a first utensil-complementary form disposed on the top surface thereof, and a second utensil-complementary form disposed on the bottom surface thereof; (f) engaging one of the plurality of mold members on the platform; (g) placing a utensil-shaped portion of uncooked dough on the utensil-complementary form of the platform- engaged mold member; (h) contacting the dough with the second utensil-complementary form disposed on the bottom surface of a second mold member to form a first layer of utensil mold; (i) repeating steps (f)-(h) wherein subsequent layers of molds are stacked on top of the first mold, the second mold member becoming the bottom mold member for subsequent layers, until a desired number of utensils are molded, thereby producing a stacked assembly of molded dough; (j) placing the stacked assembly of molded dough on an oven rack; (k) steaming the stacked assembly of molded dough; (1) cooling the steamed dough; and (m) removing the cooled utensils from the molds, thereby producing a plurality of edible and biodegradable utensils.

### Industrial mold members

Certain applications require a particularly durable and inflexible material, such as large-scale industrial applications designed for high throughput production of large numbers of utensils. Metals, particularly stainless steel, are more suitable for this application as they resist scratching and pulling, and can be exposed to repeated washing and sanitizing conditions without deformation. The molds described herein above, can be made from stainless steel, aluminum, copper or any other durable biocompatible material typically used in a commercial kitchen or food production facility.

The dual-sided molds described above derive stability from the thickness of the mold and if made of stainless steel, would be heavy and require a substantial amount of steel to produce. More cost-efficient industrial molds are made from sheets of stainless steel having a thickness of about 0.5 mm to about 2.0 mm, such as 0.5 mm, 0.6 mm, 0.7 mm, 0,8 mm, 0.9 mm, 1.0 mm, 1.1 mm, 1.2 mm, 1.3 mm, 1.4 mm, 1.5 mm, 1.6 mm, 1.7 mm, 1,8 mm, 1.9 mm, or 2.0 mm. The sheets of stainless steel are fabricated to include at least one 3-dimensional utensil-complementary form **112** in the shape of a utensil that is recessed into the top surface **104** of the first metal mold member **101** for receiving uncooked dough, the form **112** comprising contours complementary to a first side of the spoon utensil; and the second mold member **102** including at least one utensil-complementary form **113** in the shape of the utensil that is recessed into the top surface **106** of the second mold member **102** for contacting the dough received on the first mold member **101,** the form **113** comprising utensil contours complementary to the second side of the utensil that opposes the first utensil side. In one illustrative example, the first side of the utensil, which is complementary to form **112,** is not the underside of the utensil. Instead, the opposing second side of the utensil, which is complementary to form **113,** is disposed on a separate distinct mold member **102.** Thus, two different mold members are combined to form each utensil or multiples of utensils.

Described herein are ventilated, stackable, pressing molds for the preparation of edible and biodegradable utensils and other comestible items. The molds also form and maintain a 3-dimensional utensil shape from malleable, uncooked, edible dough throughout a process of steaming and dehydration of the edible dough to form items of sufficient strength for use as utensils such as cutlery that are both edible and biodegradable. The finished utensils and other products produced with the industrial molds described above are in all aspects the same as those produced with the dual sided molds described above.

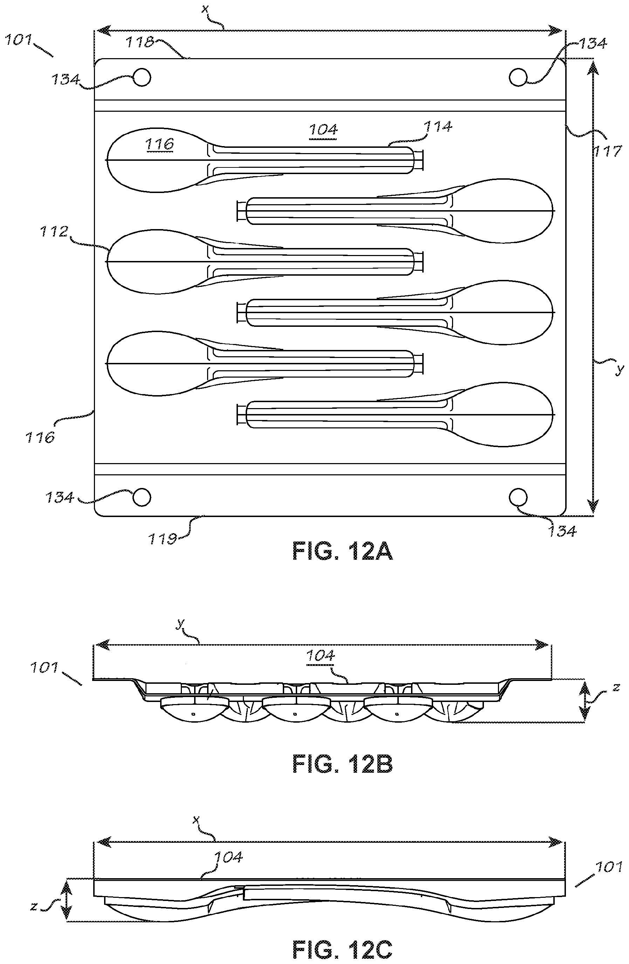

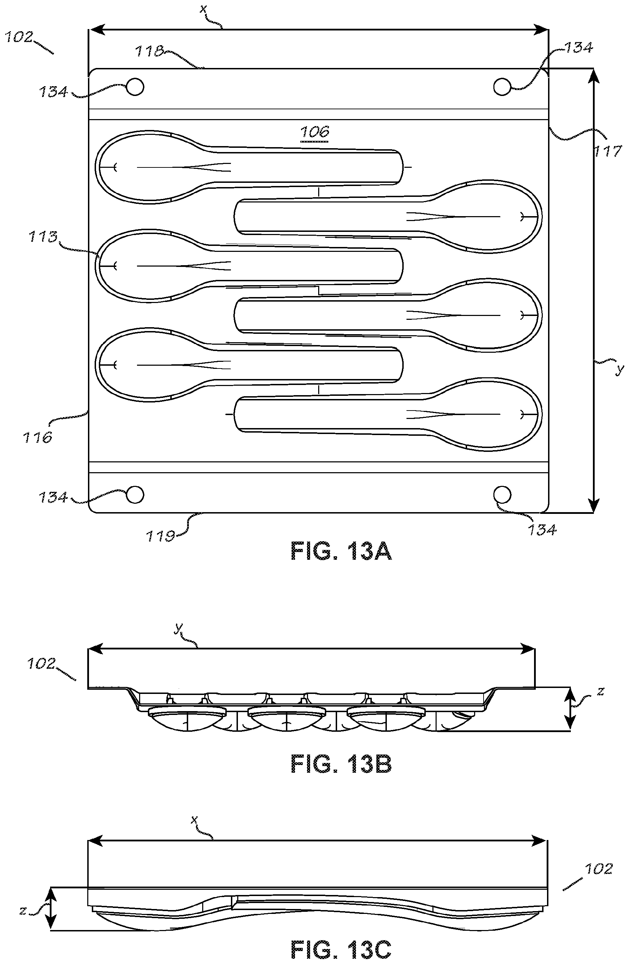

Industrial molds for preparing utensils include a first generally planar mold member **101** (see e.g. FIG. 12A-C) and a second generally planar mold member **102** (see e.g. **FIG. 13****),** each mold member having a top surface **104,** a bottom surface (not shown), and at least one vertical side (e.g. a continuous side such as in a circle), but typically having four vertical sides **116-119;** the first mold member **101** including at least one 3-dimensional utensil-complementary form **112** in the shape of a utensil that is recessed into the top surface **104** of the first mold member **101** for receiving uncooked dough, the form **112** comprising contours complementary to a first side of the utensil; and the second mold member **102** including at least one utensil-complementary form **113** in the shape of the utensil that is recessed into the top surface **104** of the second mold **member102** for contacting the dough received on the first mold member **101,** the form **113** comprising utensil contours complementary to the second side of the utensil that opposes the first utensil side. Each side of the utensil is typically formed by a different mold member.

Each mold member has a width x, a length y and a height z. For reference, the spoon mold members shown in FIGs. 12A-C and 13A-C are 243 mm long, 250 mm wide and 23.8 mm high.

The mold can have any overall shape, such as square, rectangular, polygonal, elliptical, or circular, but is most often rectangular, having four sides **116-119.** The four sides may be of the same or different lengths and heights. A first vertical side **116** opposes and is generally parallel to a second vertical side 117, both of which first and second vertical sides **116, 117** having generally rectangular shapes that are similar, identical or are mirror images of each other. A third vertical side **118** opposes and is generally parallel to a fourth vertical side **119;** both the third and fourth vertical sides may have generally rectangular shapes that are similar, identical or mirror images of each other, or may be for example, curved rectangular, arched rectangular or have complex geometric shapes that include multiple curves, arches and/or linear edges. In one example, vertical sides **118** and **119** can include two curved regions corresponding to the food usage portion of the utensil.

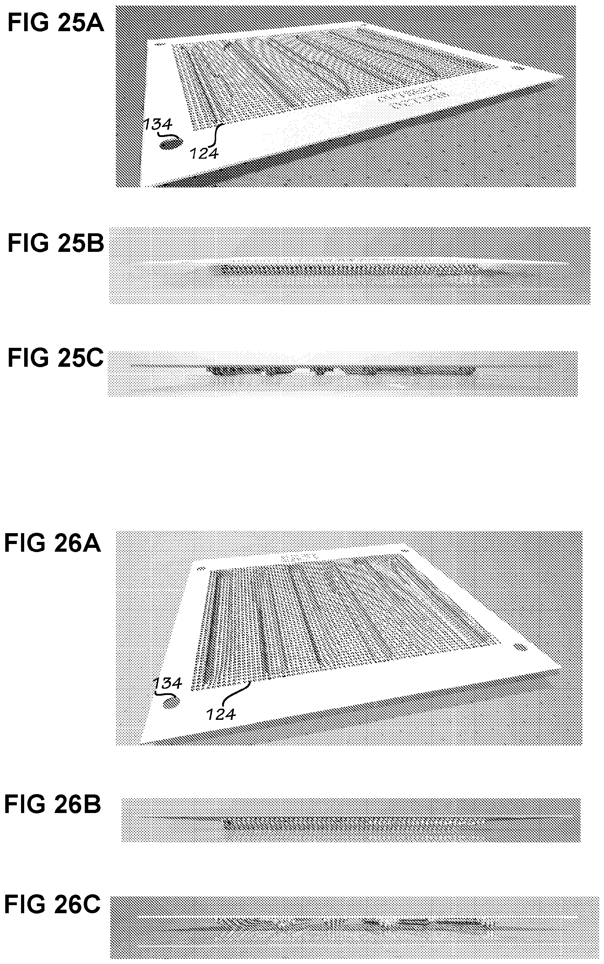

The first and second mold members **101, 102** are mated such that together they form a three dimensionally shaped utensil when uncooked dough is placed on form 112 of first mold member 101 and the dough is then contacted with form 113 of second mold member 102 to form a sandwich as illustrated schematically in **FIG. 26****.**

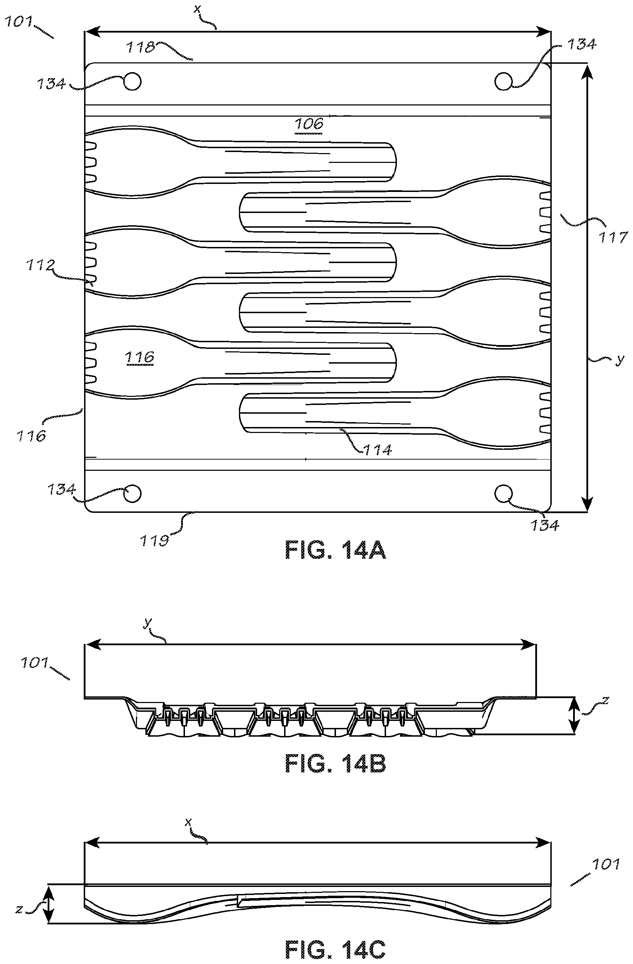

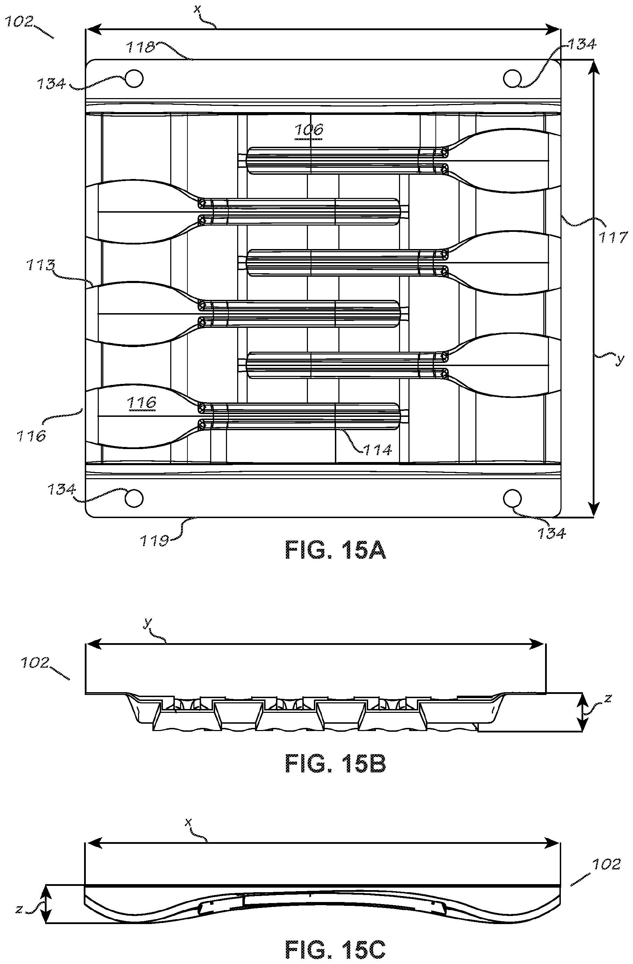

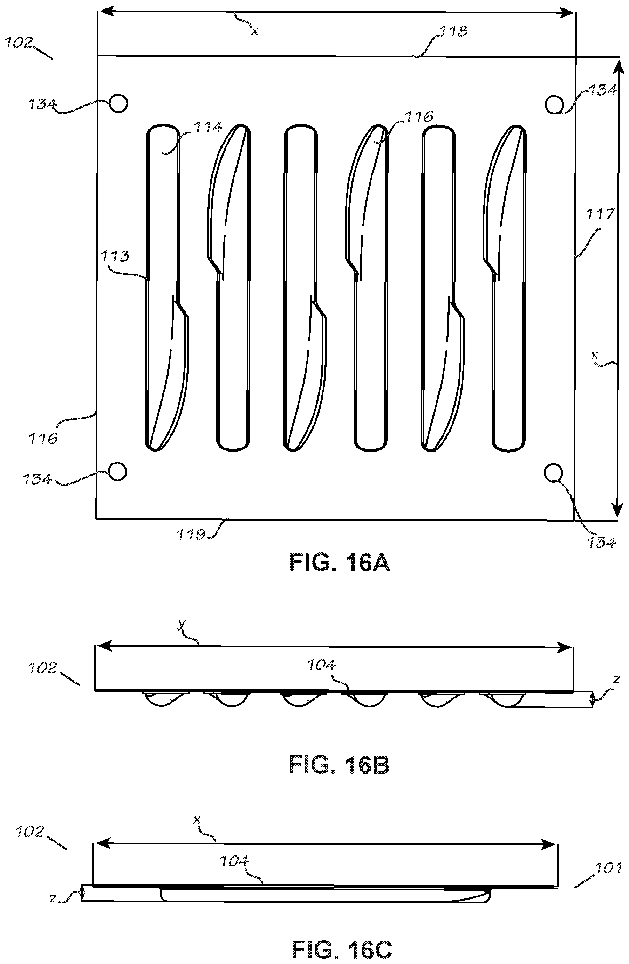

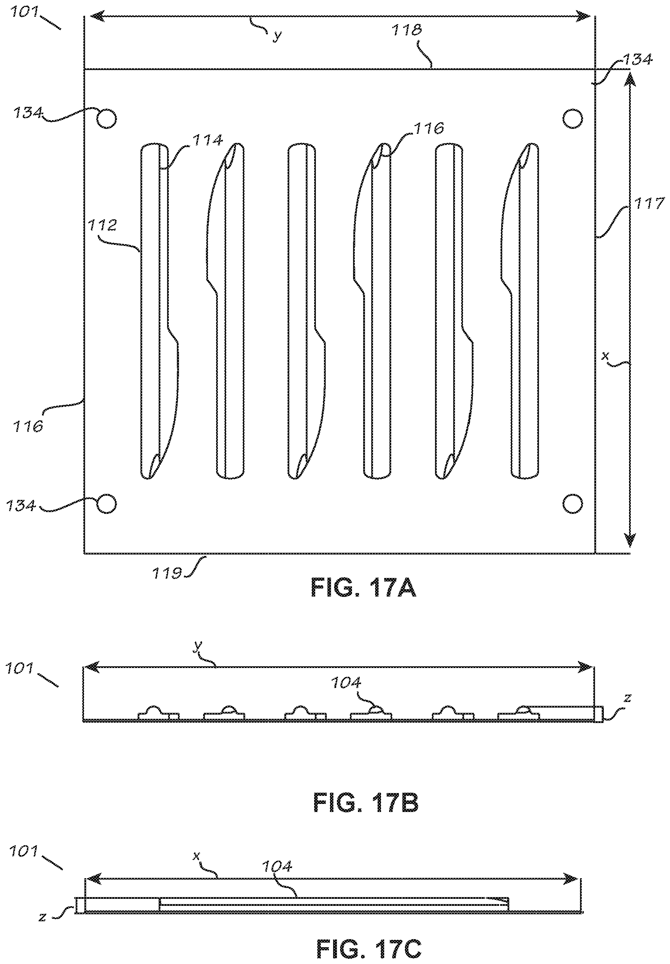

As exemplarily shown e.g. in **FIGs. 12A****,** **13A****,** **14A****,** **15A****,** **16A****,** **17A**), the forms **112** and **113** each include a handle portion **114** and a food usage portion **116** (e.g., a portion forming the tines of a fork or bowl of a spoon). The food usage portion **116** may be oriented to drain away from dough placed on form **112.** The food usage portion **116** of form **112** may be recessed deeper into the first mold member **101** than the handle portion **114,** and thereby the food usage portion **116** is lower than the handle portion **114** in the assembled final mold assembly/sandwich **110** to increase drainage and direct it away from the dough. For example, mold assembly **110** can include an arched or curved shape, and/or form **112** may be sloped relative to the overall surface plane of the first mold member **1.** Arches, curves or slopes in the forms **112, 113** may also be reflected in an arch, curve or slope shape of the third and fourth vertical sides **118, 119.**

The first and second industrial mold members **101, 200** may comprise openings **124** (e.g., through holes perpendicular to the surface plane of the mold) into which water drains away from the dough placed on the form and allow air and/or steam to flow through the mold. The openings **124** are disposed at least throughout forms **112** and **113,** and most often throughout the mold members **101** and **102.** The openings **124** can be uniform in size and or regularly spaced throughout the mold members **101, 102,** or they can be concentrated, larger, or more frequent in areas that require increased drainage or air and/or steam flow. In certain examples, the openings **124** have a diameter between about 2.0 and about 3.0 mm, such as 2.0 mm, 2.1 mm, 2.2 mm, 2.3 mm, 2.4 mm, 2.5 mm, 2.6 mm, 2.7 mm, 2.8 mm, 2.9 mm, or 3.0 mm; typically the openings **124** are about 2.2 mm to about 2.6 mm in diameter, most often, about 2.4 mm. Typically, the openings cover about 30% to about 70% of the surface area of each mold member; such as about 40% to about 60% of the surface area of each mold member, 45% to about 55% of the surface area of each mold member; and most often 46%, 47%, 48%, 49%, 50%, 51%, 52%, 53%, or 54% of the surface area of each mold member.

The openings **124** can be perpendicular to the surface plane of the mold members as illustrated in the various figures, or can be disposed at an oblique angle relative to the surface plane of the mold members. The variation can be intentional, to improve drainage in a particular area, or incidental to fabricating the molds. Specifically, the molds can be made from perforated sheets of metal by a stamping process, which forms the mold member into three-dimensional shapes and creates forms **112** and **113.** Such stamping or other means of fabricating the mold members, can distort the perforations that are the openings **124** without compromising the structural integrity and functionality of the molds. Alternatively, the openings **124** can be drilled or stamped through shaped metal mold members allowing more control over the placement and orientation of the openings. The openings may be regularly spaced holes through the full thickness of each of the first and second mold members **101, 102** and may be distributed throughout the utensil-complementary forms **112** and **113** and entire surface of the mold members in an orientation perpendicular to the longitudinal axes of the forms, said axes running from the handle portion **14** to food usage portion **16** of forms **112** and **113.** The space between openings **124** can vary, but is frequently approximately equal to or slightly wider than that of the slots.

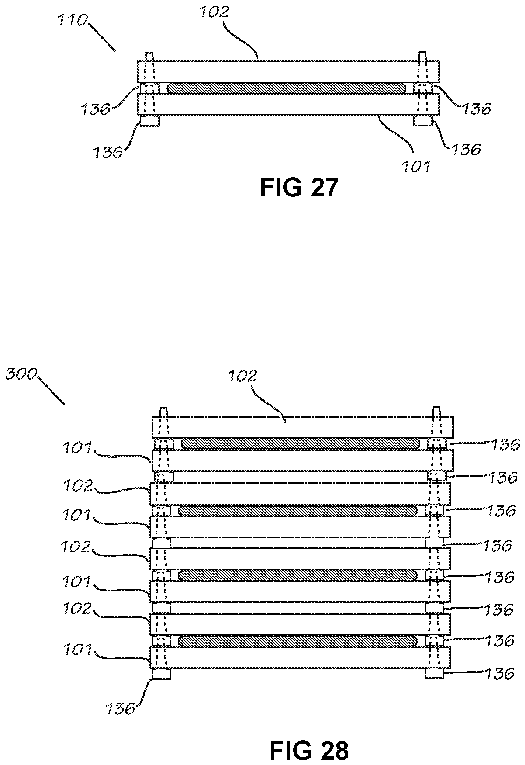

Industrial molds may include connector ports **134,** typically circular through holes in each comer the mold members **101, 102** that engage mated, interlocking stainless-steel connector dowels **136** and are aligned with connector ports **134** on the complementary mold member. Insertion of interlocking dowel connectors hold two mold members apart vertically, stabilize the two members of the mold, and permit stacking of multiple molds as illustrated in FIG. **27 and 28****.** Symmetrical and/or asymmetrical arrays of such connector ports 134 and mated connectors **136** of various shapes (e.g., having square, circular or triangular cross sections), sizes and/or number can be disposed on the first and second mold members to orient and stabilize assembly of the mold, as well as providing ventilation between mold members.

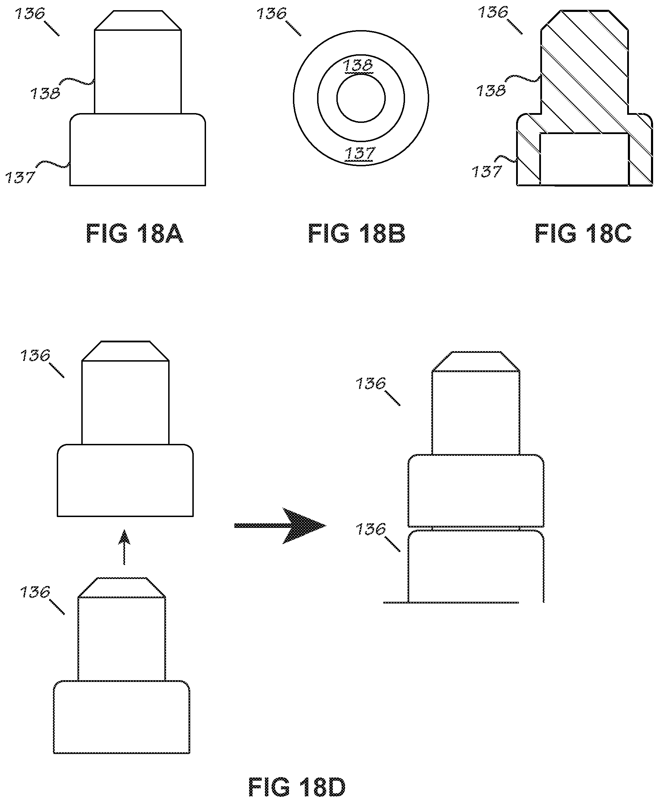

Typically, the interlocking stainless-steel connector dowels **136** comprise a wide, hollow, open-ended lower region **137,** and a narrow upper region **138** that is sized and shaped to be inserted into the lower region **137** of an identical connector dowel **136** as illustrated in **FIG 18D****.** The height of the lower region **137** is selected to effect the desired spacing between mold members **101, 102.**

For example, the mold members **101, 102** are held 2-10 mm apart from top of first (bottom) mold member to bottom of second mold member. Typically, the distance is between about 3 mm to about 8 mm, frequently about 4 mm to about 7 mm, and most often about 5 mm to about 6 mm, such as about 5.5 mm. The spacing between mold members provides both airflow and permits control over the thickness of the dough between the first and second mold members **101, 102.** The dough, when pressed between two mold members, is typically between 1 mm to about 5 mm thick, frequently between about 2 mm to about 4 mm thick, and most often about 2.5 to about 3.5 mm thick. For example, the dough can be 2.0, 2.1, 2.2, 2.3, 2.4, 2.5, 2.6, 2.8, 2.9, 3.0, 3.1, 3.2, 3.4, 3.5, 3.6, 3.7, 3.8, 3.9, or 4.0 mm thick.

Molds for use in the process according to the invention can be designed with single utensil forms **112** and **113** to produce a single utensil, or with multiple form iterations on a single mold to produce multiple utensils of the same or different types from a single mold **110.** For example, a mold comprising a first mold member **101** and a second mold member **102,** can include utensil-complementary forms to produce 2, 3, 4, 5, 6, 7, 8, 9, 10, 11, 12 or more forks, 2, 3, 4, 5, 6, 7, 8, 9, 10, 11, 12 or more spoons, or 2, 3, 4, 5, 6, 7, 8, 9, 10, 11, 12 or more knives. The first and second mold members **1, 2** shown in FIGs 12A-C and 13A-C are designed to produce 6 spoons. Alternatively, a mold comprising a first mold member **101** and a second mold member **102** can include utensil-complementary forms to produce 2, 3, 4, 5, 6, 7, 8, 9, 10, 11, 12 or more different utensils, such as one or more place settings of a fork, a spoon and a knife. The skilled artisan will appreciate that the utensil-complementary forms can be arranged on the mold members to minimize overall mold surface areas and overall size, e.g. by staggering the placement of forms and contours.

Mold members can be made from any biocompatible food-grade material that can withstand the conditions of steaming and dehydration of the utensils during the process of the invention, without deforming. Exemplary materials include metals (such as aluminum or stainless steel) and plastics, such as ULTEM 1010^{™} (polyetherimide). Mold members for use in the process of the invention have a thickness sufficient to press, form and retain uncooked dough in a utensil shape. Plastic mold members typically have a thickness of about 5 mm to about 10 mm, frequently about 6.5 mm to about 9 mm, and most often about 7.5 mm to about 8 mm. Stainless steel mold members typically have a thickness of about 0.5 to about 2.0 mm, frequently about 0.75 mm to about 1.5 mm, and most often about 1.0 mm.

Each industrial mold **10** can include a plurality of stackable mold members pairs **101, 102** that form multiple layers of utensils, as illustrated schematically in **FIG. 27****.** The plurality of stackable mold member pairs includes a first mold member **101** having a top surface **104** as described above, with second mold member **102** having a top, utensil-forming surface **106** also as described above, thereby forming a first layer of utensils when uncooked dough is molded between the first and second mold members **101, 102.** Further layers of utensils are formed by molding additional dough between subsequent mold member pairs.

An assembly **110** of a first mold member **101** and second mold member **102** with a layer of dough therebetween to form a single layer of utensil(s) is illustrated schematically in **FIG. 26****.** An assembly **300** of four stackable mold member pairs **101, 102** with four layers of dough to form four utensil layers is illustrated schematically in **FIG. 28****.**

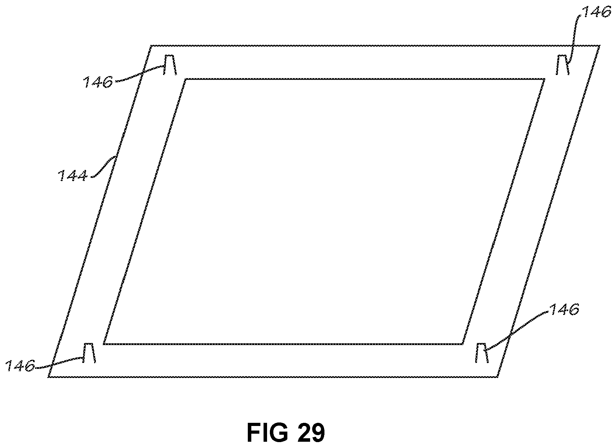

An assembly **220** for preparing utensils may also comprise a plurality of stackable mold member pairs **101, 102;** connector dowels **136;** and a platform **144** for supporting the stacked mold. The platform **144** includes pegs **146** that engage openings in the lower regions **137** of connector dowels **136.** The platform **144** can be a sheet, rack or other horizontal form. Typically, the platform **144** acts to support the bottom mold member in a stacked mold. The open center of the platform **144** illustrated in **FIG. 29** facilitates and encourages ventilation from beneath the stacked mold. The platform **144** may be adapted for use in a commercial steaming oven, such that the platform **144** can be placed on an oven rack and rotated vertically and/or horizontally in a commercial oven during the steaming process. The oven **47** may include revolving racks **48** and a means **49** to automate rotation of the vertical and horizontal position of racks to promote even steaming. A suitable revolving rack commercial oven is shown in **FIG. 10** in which dough **50** is shown on revolving racks rotated by a means **49** that includes the illustrated gear. Thus, a system for producing utensils may be provided, that includes a plurality of stackable mold member pairs **101, 102;** a platform **144** that engages and secures a mold **11** or stacked assembly of mold members **110;** and an oven **47** that includes rotating racks **48** that accepts platform **144** and secures the mold **11** or a stacked assembly of mold members **110** during rotation and steaming.

## Claims

1. A process for producing a plurality of edible and biodegradable utensils, comprising the steps of:
a) preparing an edible and biodegradable dough (50);
b) rolling the dough (50) to a desired thickness;
c) cutting a plurality of utensil-shaped portions of the rolled dough (50);
d) providing a platform (44) for supporting a stacked assembly (200) of molds adapted for securing to an oven rack (48);
e) providing a plurality of mold members (3), each mold member (3) comprising a first utensil complementary form (12) disposed on the top surface (4) thereof, and a second utensil-complementary form (13) disposed on the bottom surface (5) thereof;
f) engaging one of the plurality of mold members (3) on the platform (44);
g) placing a utensil-shaped portion of uncooked dough (50) on the utensil-complementary form (12) of the platform-engaged mold member (3);
h) contacting the dough (50) with the second utensil-complementary form (13) disposed on the bottom surface (5) of a second mold member (3) to form a first layer of utensil mold;
i) repeating steps (f)-(h), wherein subsequent layers of molds are stacked on top of the first mold, the second mold member (3) becoming the bottom mold member (3) for subsequent layers, until a desired number of utensils are molded, thereby producing a stacked assembly (200) of molded dough (50);
j) placing the stacked assembly (200) of molded dough (50) on an oven rack (48);
k) steaming the stacked assembly (200) of molded dough (50);
l) cooling the steamed dough (50); and
m) removing the cooled utensils from the molds, thereby producing a plurality of edible and biodegradable utensils.

## Patentansprüche

1. Ein Verfahren zur Herstellung einer Vielzahl von essbaren und biologisch abbaubaren Utansilien, das die folgenden Schritte umfasst:
a) Zubereiten eines essbaren und biologisch abbaubaren Teigs (50);
b) Ausrollen des Teigs (50) auf die gewünschte Dicke,
c) Schneiden einer Vielzahl von utensilienförmigen Portionen des gerollten Teigs (50);
d) Bereitstellen einer Plattform (44) zum Tragen einer gestapelten Anordnung (200) von Formen, die zur Befestigung an einem Ofenrost (48) geeignet ist;
e) Bereitstellen einer Vielzahl von Formteilen (3), wobei jeder Formteil (3) eine erste komplementäre Utensilien-Form (12) umfasst, die auf seiner Oberseite (4) angeordnet ist, und auf der Bodenfläche (5) angeordnete zweite komplementäre Utensilien-Form (13);
f) Einrasten einer der Vielzahl von Formteilen (3) auf der Plattform (44);
g) Anordnen einer utensilienförmigen Portion ungekochten Teigs (50) auf der komplementären Utensilien-Form (12) des mit einer Plattform eingerasteten Formteils (3);
h) In Berührung Bringen des Teigs (50) mit der auf der Unterseite (5) eines zweiten Formelements (3) angeordneten zweiten komplementären Utensilien-Forms (13), um eine erste Schicht der Utensilienform zu bilden;
i) Wiederholen der Schritte (f)-(h), wobei nachfolgende Schichten von Formen auf die erste Form gestapelt werden, wobei der zweite Formteil (3) der untere Formteil (3) für nachfolgende Schichten wird, bis eine gewünschte Anzahl von Utensilien geformt ist, wodurch eine gestapelte Anordnung (200) von geformtem Teig (50) hergestellt wird;
j) Auflegen der gestapelten Montage (200) aus geformtem Teig (50) auf einen Ofenrost (48);
k) Dämpfen der gestapelten Montage (200) aus geformtem Teig (50);
l) Kühlen des gedämpften Teigs (50); und
m) Entnahme der gekühlten Utensilien aus den Formen, wodurch eine Vielzahl von essbaren und biologisch abbaubaren Utensilien entsteht.

## Revendications

1. Procédé de fabrication d'une pluralité d'ustensiles comestibles et biodégradables, comprenant les étapes suivantes :
a) préparer une pâte comestible et biodégradable (50) ;
b) rouler la pâte (50) jusqu'à l'épaisseur souhaitée ;
c) couper une pluralité de portions en forme d'ustensiles dans la pâte roulée (50) ;
d) fournir une plate-forme (44) pour supporter un ensemble empilé (200) de moules adaptés pour être fixés à une grille de four (48) ;
e) fournir une pluralité d'éléments de moule (3), chaque élément de moule (3) comprenant une première forme complémentaire d'ustensile (12) placée sur sa surface supérieure (4), et une deuxième forme complémentaire d'ustensile (13) placée sur sa surface inférieure (5) ;
f) engager l'un de la pluralité d'éléments de moule (3) sur la plate-forme (44) ;
g) placer une portion de pâte non cuite en forme d'ustensile (50) sur la forme complémentaire de l'ustensile (12) de l'élément de moule (3) engagé sur la plate-forme ;
h) mettre en contact la pâte (50) avec la deuxième forme complémentaire d'ustensile (13) disposée sur la surface inférieure (5) d'un deuxième élément de moule (3) pour former une première couche de moule d'ustensile ;
i) répéter les étapes (f)-(h), dans lesquelles les couches suivantes de moules sont empilées sur le premier moule, le deuxième élément de moule (3) devenant l'élément de moule inférieur (3) pour les couches suivantes, jusqu'à ce qu'un nombre désiré d'ustensiles soit moulé, produisant ainsi un ensemble empilé (200) de pâte moulée (50) ;
j) placer l'ensemble empilé (200) de pâte moulée (50) sur une grille de four (48) ;
k) faire cuire à la vapeur l'ensemble empilé (200) de pâte moulée (50) ;
l) refroidir la pâte cuite à la vapeur (50) ; et
m) démouler les ustensiles refroidis, ce qui permet de produire plusieurs ustensiles comestibles et biodégradables.
